# EUROPÄISCHE PATENTSCHRIFT

(11) **EP 0 262 378 B1**
(45) Veröffentlichungstag und Bekanntmachung des Hinweises auf die Patenterteilung: **21.12.1994**
(21) Anmeldenummer: 87112206.5
(22) Anmeldetag: 22.08.1987
(51) Int. Cl.: C08K 5/17, C08K 5/09, B29C 45/00, C08G 18/32, C08G 18/48

(54) **Verfahren zur Herstellung von elastischen, im wesentlichen kompakten Polyurethan-Formkörpern mit verbesserten Entformungseigenschaften**
Process for the production of elastic essentially compact polyurethane mouldings with improved mould release properties
Procédé pour la préparation de pièces moulées élastiques et essentiellement compactes en polyuréthane avec des propriétés de démoulage améliorées

(30) Priorität: 30.08.1986 DE 3629630
(43) Veröffentlichungstag der Anmeldung: 06.04.1988
(73) Patentinhaber: BASF Aktiengesellschaft, 67063 Ludwigshafen (DE)
(72) Erfinder: Horn, Peter, Dr., D-6900 Heidelberg (DE); Schmidt, Hans Ulrich, D-6700 Ludwigshafen (DE)

(56) Entgegenhaltungen:
- EP-A- 0 119 471
- EP-A- 0 173 888
- WO-A-86/01215
- DE-A- 3 535 711
- US-A- 4 411 861

## Beschreibung

Die Herstellung von zellhaltigen oder kompakten, elastischen Formkörpern nach dem Polyisocyanat-Polyadditionsverfahren mit Hilfe der bekannten Reaktionsspritzgußtechnik in vorzugsweise geschlossenen Formwerkzeugen oder nach dem Gießverfahren in offenen Formen sind Gegenstand zahlreicher Literatur- und Patentpublikationen.

Eine zusammenfassende Übersicht über die Herstellung derartiger Formkörper und ihre mechanischen Eigenschaften wird beispielsweise veröffentlicht in Kunststoff-Handbuch, Band 7, Polyurethane, 1. Auflage, 1966, Seiten 206 ff, herausgegeben von R. Vieweg und A. Höchten, und 2. Auflage, 1983, Seiten 391 ff, herausgegeben von G. Oertel, Carl Hanser Verlag, München, Wien, in Journal of Cellular Plastics, März/April 1975, Seiten 87-98 vom D.J. Prepelka und J.L. Wharton und in derselben Zeitschrift März/April 1973, Seiten 76-84 von U. Knipp.

Je nach Wahl der höhermolekularen Verbindungen mit mindestens zwei reaktiven Wasserstoffatomen und der niedermolekularen Kettenverlängerungsmittel, z.B. von mehrwertigen Alkoholen und/oder aromatischen Diaminen, unterscheidet man hierbei zwischen Polyurethan-, Polyurethan-Polyharnstoff- und Polyharnstoff-Formkörpern.

Um die Entformung der Formkörper zu verbessern, werden Trennmittel eingesetzt. Aus dem Stand der Technik sind eine Reihe von Trennmitteln, die den Einsatzkomponenten zugesetzt werden, sogenannte innere Trennmittel, bekannt.

So werden in WO 86/01215 innere Trennmittel beschrieben, die aus einem Metallsalz einer Carbonsäure, einer Amidocarbonsäure, einer Phosphor oder einer Bor enthaltenden Carbonsäure, das mit der Polyolkomponente unverträglich ist, und einem tertiären Amin als Verträglichkeitsvermittler, beschrieben. US-A-4,111,861 beinhaltet innere Trennmittel für Polyurethan-Elastomere, die aus einer Mischung einer Fettsäure mit 8 bis 35 Kohlenstoffatomen und einer Komponente, ausgewählt aus der Gruppe von Natriumcarbonat, Natriumoleat und Kaliumlaurat.

In EP-A-0 119 471 werden als innere Trennmittel Gemische aus mindestens einem Metallsalz einer organischen Säure, mindestens einer Komponente mit aktivem Wasserstoff, die eine oder mehrere primäre und sekundäre Aminogruppen enthalten, sowie mindestens einer organischen Säure, beschrieben.

Bisher gelang es jedoch nicht, elastische, im wesentlichen kompakte Polyurethan-Formkörper in größeren Serien herzustellen.

Ein inneres Formtrennmittel zur Herstellung von Formkörpern nach dem Polyisocyanat-Polyadditionsverfahren bestehend aus
A) einer Mischung aus
   i) 5 bis 80 Gew.-Teilen mindestens eines organischen Amins und/oder cyclischen Lactams,
   ii) 20 bis 95 Gew.-Teilen mindestens eines Metallsalzes der Stearin- und/oder Isostearinsäure und
   iii) 0 bis 5 Gew.-Teilen eines Metallsalzes einer organischen Mono- und/oder Dicarbonsäure und
B) 0,01 bis 200 Gew.-%, bezogen auf das Gesamtgewicht der Mischung (A) mindestens einer organischen Mono- und/oder Dicarbonsäure oder deren Anhydride
wird beschrieben in der DE-A-35 35 711. Durch die Verwendung dieses inneren Trennmittels können in Verbindung mit aromatischen Diaminen als Kettenverlängerungsmittel zellhaltige oder kompakte Polyharnstoff- und Polyurethan-Polyharnstoff-Formkörper nach Angaben der DE-A-35 35 711 und Polyurethan-Formkörper mit einem zelligen Kern und einer verdichteten Randzone nach Angaben der DE-A-36 07 447 in Versuchsserien von mehr als 30 Formteilen problemlos hergestellt werden.

Überraschenderweise wurde nun gefunden, daß diese inneren Trennmittel auch zur Herstellung von elastischen, im wesentlichen kompakten Polyurethan-Formkörpern nach dem RIM-Verfahren eingesetzt werden können.

Die Aufgabe der vorliegenden Erfindung bestand darin, elastische, im wesentlichen kompakte Polyurethan-Formkörper in offenen oder vorzugsweise geschlossenen Formwerkzeugen zweckmäßigerweise nach dem RIM-Verfahren ohne Unterbrechnung der Produktionsweise zur Behandlung des Formwerkzeugs in möglichst großen Stückzahlen herzustellen.

Diese Aufgabe konnte überraschenderweise gelöst werden durch ein Verfahren zur Herstellung von elastischen, im wesentlichen kompakten Polyurethan-Formkörpern nach dem Polyisocganat-Polyadditonsverfahren durch Umsetzung von
a) organischen Polyisocyanaten,
b) höhermolekularen Verbindungen mit mindestens 2 reaktiven Wasserstoffatomen und
c) niedermolekularen mehrwertigen Alkoholen und/oder Polyoxyalkylen-polyolen
in Gegenwart von
d) inneren Formtrennmitteln,
e) Katalysatoren sowie gegebenenfalls
f) Hilfsmitteln und/oder Zusatzstoffen
in einem Formwerkzeug, dadurch gekennzeichnet, daß mar als inneres Formtrennmittel verwendet
A) 0,1 bis 15 Gew.%, bezogen auf das Gesamtgewicht der Komponenten (b) und (c), einer Mischung aus
   i) 5 bis 80 Gew. -Teilen einer Mischung aus organischen Aminen aus der Gruppe der primären aliphatischen und/oder cycloaliphatischen Monoamine mit 3 bis 20 Kohlenstoffatomen, der linearen, verzweigten, cyclischen und/oder heterocyclischen Alkanolamine mit 2 bis 12 Kohlenstoffatomen, der aliphatischen oder cycloaliphatischen primären Diamine mit 2 bis 20 Kohlenstoffatomen und der aliphatischen oder cycloaliphatischen primären Mono- und/oder Polyamine, die zusätzlich sekundär und/oder tertiäre Aminogruppen und/oder heterocyclische Reste und/oder Hydroxylgruppen und/oder Ethergruppen enthalten,
   ii) 20 bis 95 Gew. -Teilen einer Mischung aus mindestens zwei Stearaten aus der Gruppe von Zink-, Calcium-, Magnesium-, Natrium- und Kaliumstearat,
B) 0,01 bis 32 Gew.%, bezogen auf das Gesamtgewicht der Komponenten (b) und (c) mindestens einer organischen Mono- und/oder Dicarbonsäure oder deren Anhydride.

Die Herstellung von Formkörpern mit selbsttrennenden Eigenschaften aus Polyurethan-Elastomersystemen nach dem erfindungsgemäßen Verfahren war insofern nicht vorhersehbar, da durch die Verwendung von niedermolekularen mehrwertigen Alkoholen als Kettenverlängerungsmittel in der Regel ein Zweiphasensystem gebildet wird, welches das Einbringen und die Wirksamkeit von inneren Trennmitteln erschweren sollte. Durch den Zusatz der erfindungsgemäß verwendbaren inneren Formtrennmittel wird überraschenderweise die Phasentrennung überwunden und es werden stabile Dispersionen aus den Aufbaukomponenten (b) bis (e) und gegebenenfalls (f) erhalten. Bemerkenswerterweise bilden sich bei Verwendung von mit Ethylendiamin gestarteten Polyoxyalkylen-polyolen als Kettenverlängerungsmittel in bereits geringen Mengen anstelle von stabilen Dispersionen einphasige klare Lösungen aus den genannten Aufbaukomponenten.

Zu den für das erfindungsgemäße Verfahren verwendbaren Aufbaukomponenten (a) bis (e) sowie gegebenenfalls (f) und den Ausgangsstoffen zur Herstellung der inneren Formtrennmittel ist folgendes auszuführen:
Als organische Polyisocyanate (a) kommen aliphatische, cycloaliphatische, araliphatische und vorzugsweise aromatische mehrwertige Isocyanate in Frage. Im einzelnen seien beispielshaft genannt: Alkylendiisocyanate mit 4 bis 12 Kohlenstoffatomen im Alkylenrest, wie 1,12-Dodecan-diisocyanat, Tetramethylen-diisocyanat-1,4 und vorzugsweise Hexamethylen-diisocyanat-1,6; cycloaliphatische Diisocyanate, wie Cyclohexan-1,3- und 1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisotyanat sowie die entsprechenden Isomerengemische, 4,4'-, 2,2'- und 2,4'-Dicyclohexylmethan-diisocyanat sowie die entsprechenden Isomerengemische und vorzugsweise aromatische Di- und Polyisocyanate, wie 4,4'-, 2,4'- und 2,2'-Diisocyanato-diphenylmethan und die entsprechenden Isomerengemische, 2,4- und 2,6-Diisocyanato-toluol und die entsprechenden Isomerengemische, 1,5-Diisocyanato-naphthalin, Polyphenyl-polymethylen-polyisocyanate, 2,4,6-Triisocyanato-toluol und vorzugsweise Gemische aus Diphenylmethan-diisocyanaten und Polyphenyl-polymethylen-polyisocyanaten (Roh-MDI). Die genannten Di- und Polyisocyanate können einzeln oder in Form von Mischungen eingesetzt werden.

Häufig werden auch sogenannte modifizierte mehrwertige Isocyanate, d.h. Produkte, die durch partielle chemische Umsetzung obiger Di- und/oder Polyisocyanate erhalten werden, verwendet. Als modifizierte organische Di- und Polyisocyanate kommen beispielsweise in Betracht: Carbodiimidgruppen aufweisende Polyisocyanate gemäß DE-PS 10 92 007, Allophanatgruppen aufweisende Polyisocyanate, wie sie z.B. in der britischen Patentschrift 994 890, den ausgelegten Unterlagen des belgischen Patents 761 626 und der NL-OS 71 02 524 beschrieben werden, Isocyanuratgruppen aufweisende Polyisocyanate, wie sie z.B. in den DE-PS 10 22 789, 12 22 067 und 10 27 394 sowie den DE-OS 19 29 034 und 20 04 048 beschrieben werden, Urethangruppen aufweisende Polyisocyanate, wie sie z.B. in den ausgelegten Unterlagen des belgischen Patents 752 261 oder der US-PS 3 394 164 beschrieben werden, acylierte Harnstoffgruppen aufweisende Polyisocyanate z.B. gemäß DE-PS 12 30 778, Biuretgruppen aufweisende Polyisocyanate z.B. gemäß DE-PS 11 01 394 und GB-PS 889 050; durch Telomerisationsreaktionen hergestellte Polyisocyanate z.B. entsprechend den ausgelegten Unterlagen des belgischen Patents 723 640, Estergruppen aufweisende Polyisocyanate, wie sie z.B. in der GB-PS 965 474 und 1 072 956, der US-PS 3 567 765 und der DE-PS 12 31 688 genannt werden.

Vorzugsweise kommen jedoch zur Anwendung: urethangruppenhaltige Polyisocyanate, beispielsweise mit niedermolekularen linearen oder verzweigten Alkandiolen, Dialkylen-glykolen oder Polyoxyalkylen-glykolen mit Molekulargewichten bis 3000 auf Basis von Ethylenoxid, 1,2-Propylenoxid oder deren Gemischen modifiziertes 4,4'- und/oder 2,4'-Diphenylmethan-diisocyanat oder 2,4- und/oder 2,6-Toluylen-diisocyanat, Carbodiimidgruppen und/oder Isocyanuratringe enthaltende Polyisocyanate, z.B. auf 4,4'-, 2,4'-Diphenylmethan-diisocyanat-, 2,4- und/oder 2,6-Toluylen-diisocyanat-Basis und insbesondere 4,4'-Diphenylmethan-diisocyanat, Mischungen aus 2,4'- und 4,4'-Diphenylmethan-diisocyanat, Toluylen-diisocyanate, Mischungen aus Diphenylmethan-diisocyanaten und Polyphenyl-polymethylen-polyisocyanaten (Roh-MDI) und Gemische aus Toluylen-diisocyanaten und Roh-MDI.

Zur Herstellung der elastischen, im wesentlichen kompakten Polyurethan-Formkörper werden zweckmäßigerweise aromatische Polyisocyanate oder Polyisocyanatmischungen mit einer durchschnittlichen Funktionalität von 2 bis 2,4, vorzugsweise 2 bis 2,2 verwendet.

Als höhermolekulare Verbindungen (b) mit mindestens zwei reaktiven Wasserstoffatomen werden solche mit einer Funktionalität von 2 bis 8 und einem Molekulargewicht von 480 bis 12.000, verwendet. Bewährt haben sich vorzugsweise di- und/oder trifunktionelle, insbesondere difunktionelle Polyole mit einem Molekulargewicht von 480 bis 12.000, vorzugsweise von 1.800 bis 5.600 ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure und Fumarsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20-35 : 35-50 : 20-32 Gew.Teilen, und insbesondere Adipinsäure. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. epsilon-Caprolacton, oder Hydroxycarbonsäuren, z.B. omega-Hydroxycapronsäure.

Die Polyester-polyole besitzen vorzugsweise eine Funktionalität von 2 bis 3 und ein Molekulargewicht von 1.000 bis 3.000 und vorzugsweise 1.800 bis 2.500.

Insbesondere als Polyole verwendet werden jedoch Polyetherpolyole, die nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und gegebenenfalls einem Startermolekül, das 2 bis 8, vorzugsweise 2 bis 4 und insbesondere 2 und/oder 3 reaktive Wasserstoffatome gebunden enthält, hergestellt werden.

Geeignete Alkylenoxide sind beispielsweise Tetrahydrofuran, 1,3-Propylenoxid, 1,2- bzw. 2,3-Butylenoxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und/oder aromatische Diamine mit 2 bis 15 Kohlenstoffatomen, gegebenenfalls N-mono-, N,N- und N,N'-dialkylsubstituierte Diamine der genannten Art mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan.

Als Startermoleküle kommen ferner in Betracht Alkanolamine, wie Ethanolamin, Diethanolamin, N-Methyl- und N-Ethyl-ethanolamin, N-Methyl- und N-Ethyl-diethanolamin und Triethanolamin sowie Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Saccharose.

Die Polyether-polyole besitzen vorzugsweise eine Funktionalität von 2 bis 4 und Molekulargewichte von 480 bis 12.000, vorzugsweise 1.800 bis 5.600 und insbesondere 1.800 bis 4.000. Sie können ebenso wie die Polyester-polyole einzeln oder in Form von Mischungen verwendet werden. Ferner können sie mit den Polyester-polyolen sowie den hydroxylgruppenhaltigen Polyesteramiden, Polyacetalen, Polycarbonaten und/oder Polyether-polyaminen gemischt werden.

Als hydroxylgruppenhaltige Polyacetale kommen z.B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Als Kettenverlängerungsmittel (c) finden niedermolekulare mehrwertige, vorzugsweise zwei- und/oder dreiwertige Alkohole und/oder di- bis tetrafunktionelle, vorzugsweise di- und/oder trifunktionelle Polyoxyalkylen-polyole mit Molekulargewichten bis 800, vorzugsweise von 98 bis 450 und insbesondere von 98 bis 300 Verwendung. Bewährt haben sich ferner Mischungen aus niedermolekularen mehrwertigen Alkoholen und/oder den genannten Polyoxyalkylen-polyolen und sekundären aromatischen Diaminen.

Als mehrwertige Alkohole kommen beispielsweise in Betracht: aliphatische und/oder araliphatische Diole mit 2 bis 14, vorzugsweise 2 bis 6 Kohlenstoffatomen, wie z.B. Propandiol-1,3, Decandiol-1,10, Cyclohexan-diole, Bis-(2-hydroxyethyl)-hydrochinon und vorzugsweise Ethandiol-1,2, Butandiol-1,4 und Hexandiol-1,6, Triole, wie z.B. Glycerin und Trimethylolpropan, und Pentaerythrit. Geeignete Polyoxyalkylen-polyole sind beispielsweise Diethylen-glykol, Dipropylen-glykol und niedermolekulare Polyoxyethylen-polyole, Polyoxypropylen-polyole und Polyoxyethylen-polyoxypropylen-polyolen auf Basis der vorgenannten sowie insbesondere auf Basis von aliphatischen Diaminen mit 2 bis 6 Kohlenstoffatomen als Startermoleküle. Als sekundäre aromatische Diamine seien beispielhaft genannt: N,N'-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie z.B. N,N'-Diethyl-, N,N'-Di-sek.-pentyl-, N,N'-Di-sek.-hexyl-, N,N'-Di-sek.-decyl-, N,N'-Dicyclohexyl-p- bzw. -m-phenylendiamin, N,N'-Dimethyl-, N,N'-Diethyl-, N,N'-Diisopropyl-, N,N'-Di-sek.-butyl-, N,N'-Dicyclohexyl-4,4'-diamino-diphenylmethan und N,N'-Di-sek.-butyl-benzidin.

Vorzugsweise Anwendung finden als Komponente (c) niedermolekulare zwei- und/oder dreiwertige Alkohole und/oder di- bis tetrafunktionelle Polyoxy-alkylen-polyole mit Molekulargewichten von 98 bis 450.

Die Verbindungen der Komponente (c) können, wie bereits dargelegt wurde, in Form von Mischungen oder einzeln eingesetzt werden und werden vorteilhafterweise in Mengen von 1 bis 40 Gew.-Teilen, vorzugsweise von 5 bis 20 Gew.-Teilen, bezogen auf 100 Gew.-Teile der höhermolekularen Verbindungen (b), angewandt.

Wie bereits dargelegt wurde, bestehen die erfindungsgemäß verwendbaren inneren Formtrennmittel (d) aus
A) einer Mischung aus
   i) mindestens einem organischen Amin und
   ii) mindestens einem Metallsalz der Stearinsäure und
B) mindestens einer organischen Mono- und/oder Dicarbonsäure, wobei anstelle der freien Carbonsäure auch deren Anhydride verwendet werden können.

Als organische Amine (Ai) eignen sich Mono- und/oder Polyamine ausgewählt aus der Gruppe der primären aliphatischen und/oder cycloaliphatischen Monoamine mit 3 bis 20 Kohlenstoffatomen, vorzugsweise 4 bis 13 Kohlenstoffatomen, wie z.B. Isopropyl-, n-Butyl-, iso-Butyl-, sek. Butyl-, n- und iso-Amyl-, 1,2-Dimethylpropyl-, n- und iso-Hexyl-, 2-Ethyl-hexyl-, Octyl-, 6-Methyl-heptyl-2-, 2-Ethyl-octyl-, Decyl-, Tridecyl-, Dodecyl-, Hexadecyl-, Octadecyl-, Stearyl- und Cyclohexylamin, der linearen, verzweigten, cyclischen oder heterocyclischen Alkanolamine mit 2 bis 12 Kohlenstoffatomen, vorzugsweise 2 bis 10 Kohlenstoffatomen wie z.B. Ethanolamin, Propanolamin, Butanolamin, 3-Hydroxybutylamin, 2-Hydroxybutylamin, Pentanolamin, Hexanolamin, 4-Hydroxyhexylamin, Octanolamin und 1-(2-Hydroxyethyl)piperazin, N-Methyl-, N-Butyl-, N-Neopentyl-, N-Cyclohexylethanolamin, N-Methyl-isopropanolamin, Diethanolamin, Dipropanolamin, N-Alkyl-dialkanolamin mit 1 bis 6-Kohlenstoffatome im Alkylrest wie z.B. N-Methyl-, N-Butyl-, N-Cyclohexyl-diethanol- bzw. diisopropanolamin, 1,4-Dihydroxyethyl-piperazin, 1,4-Diisopropanol-piperazin, Triethanolamin und Triisopropanolamin, der aliphatischen oder cycloaliphatischen primären Diamine mit 2 bis 20 Kohlenstoffatomen, vorzugsweise 2 bis 12 Kohlenstoffatomen, wie z.B. Ethylen-, 1,2- bzw. 1,3-Propylen-, 1,4-Butylen-, 1,6-Hexamethylen-, Neopentylen-, 1,10-Decylen-, 1,12-Dodecylen-diamin und Diaminocyclohexane, der aliphatischen oder cycloaliphatischen primären Mono- und/oder Polyamine mit Molekulargewichten von z.B. 103 bis 2.000, vorzugsweise von 117 bis 800, die zusätzlich sekundäre und/oder tertiäre Aminogruppen und/oder heterocyclische Reste und/oder Hydroxylgruppen und/oder Ethergruppen gebunden enthalten wie z.B. Diethylen-triamin, Dipropylen-triamin, Di-hexamethylen-triamin, 1-Diethylamino-4-pentyl-, 3-(2-Ethylhexoxy)-propyl-, 3-(2-Aminoethyl)aminopropylamin, N,N'-Bis(3-aminopropyl)ethylendiamin, Kondensationsprodukte aus Diethylentriamin, N-2-Aminoethyl-ethanolamin, 2-Aminoethoxyethanol-2, 4,9-Dioxadodecan-1,12-diamin, N,N'-Bis-(3-aminopropyl)-ethylendiamin, 1-(2-Aminoethyl-)piperazin, 1,4-Bis-(2-Aminoethyl)-piperazin, 1,4-Bis-(3-Aminopropyl-)piperazin, Tris-(aminoethyl-)amin und Tris-(3-aminopropyl-)amin und Polyoxyalkylen-mono- und/oder polyamine mit primären und/oder sekundären Aminogruppen, einer Funktionalität von 1 bis 6, vorzugsweise 2 bis 4 und Molekulargewichten von 400 bis 5.000, vorzugsweise von 400 bis 2.000 wie z.B. Polyoxypropylen-diamine, Polyoxyethylen-diamine, Polyoxypropylen-polyoxyethylen-diamine, Polyoxypropylen-triamine, Polyoxyethylen-triamine, Polyoxypropylen-polyoxyethylen-triamine und Polyoxypropylen-polyoxyethylen-tetramine. Geeignet sind auch Polyoxyalkylen-polyamine, die bis zu 50 %, vorzugsweise bis zu 15 %, endständige primäre und/oder sekundäre Hydroxylgruppen gebunden enthalten. Die organischen Amine (Ai) können einzeln oder als Mischungen aus Aminen der gleichen Gruppe oder aus Aminen von verschiedenen Gruppen eingesetzt werden.

Als organische Amine (Ai) haben sich insbesondere bewährt und werden daher vorzugsweise eingesetzt: n-Butylamin, Tridecylamin, 6-Methyl-heptyl-2-amin, 1-(2-Aminoethyl)piperazin, 1-(2-Hydroxyethyl)piperazin, N-2-Aminoethyl-ethanolamin, Diethylentriamin, Dipropylentriamin, N,N-Dimethyl-diaminopentan-1,5, Polyalkylen-polyamine mit Molekulargewichten von 117 bis 800, beispielsweise Polyethylen-polyamine, Polyoxypropylen-triamine und 3,3'-Dimethyl-4,4'-diamino-dicyclohexylmethan.

Zur Herstellung der Metallsalze (Aii) eignet sich die handelsübliche Stearinsäure, die, ohne daß die Trennwirkung signifikant beeinträchtigt wird, bis zu 10 Gew.-%, vorzugsweise bis zu 5 Gew.-% andere, gegebenenfalls ungesättigte Carbonsäuren mit 8 bis 24 Kohlenstoffatomen, wie z.B. Palmitinsäure, Ölsäure, Ricinolsäure u.a. enthalten kann.

Als Metalle für die Bildung der Metallsalze (Aii) finden Alkalimetalle, vorzugsweise Natrium und Kalium, Erdalkalimetalle, vorzugsweise Magnesium und Calcium und insbesondere Zink Verwendung. Vorzugsweise werden als Metallsalze der Stearinsäure Zinkstearat, Calciumstearat und Natriumstearat oder Mischungen aus mindestens zwei Stearaten eingesetzt. Insbesondere verwendet wird eine Mischung aus Zink-, Calcium- und Natriumstearat.

Die erfindungsgemäß verwendbaren inneren Trennmittel enthalten als wesentliche Aufbaukomponente Mono- und/oder Dicarbonsäuren oder deren Anhydride (B). In Betracht kommen aliphatische Monocarbonsäuren mit 1 bis 20 Kohlenstoffatomen, vorzugsweise 5 bis 18 Kohlenstoffatomen, aliphatische Dicarbonsäuren mit 2 bis 36 Kohlenstoffatomen, vorzugsweise 2 bis 12 Kohlenstoffatomen, aromatische Mono- und/oder Dicarbonsäuren mit 7 bis 12 Kohlenstoffatomen, vorzugsweise 7 bis 10 Kohlenstoffatomen, die gegebenenfalls olefinisch ungesättigte Einheiten und/oder mit Isocyanatgruppen reaktive Reste, wie z.B. Hydroxyl-, Amino- oder Alkylaminogruppen, gebunden enthalten können. Anstelle der Mono- und/oder Dicarbonsäuren oder im Gemisch mit diesen können auch die entsprechenden Carbonsäureanhydride eingesetzt werden. Beispielhaft genannt seien aliphatische Monocarbonsäuren wie z.B. Ameisensäure, Essigsäure, Propionsäure, Isovaleriansäure, Capronsäure, Caprinsäure, Laurinsäure, Myristinsäure, Palmitinsäure, Stearinsäure, Ricinolsäure, Arachinsäure, Hydroxystearinsäure, Isostearinsäure und Ölsäure, aliphatische Dicarbonsäuren wie z.B. Oxalsäure, Bernsteinsäure, Glutarsäure, Adipinsäure, Pimelinsäure, Korksäure, Sebacinsäure, Undecandisäure, Dodecandisäure, dimerisierte und trimerisierte Fettsäuren, Maleinsäure und Fumarsäure und aromatische Mono- und/oder Dicarbonsäuren wie z.B. Benzoesäure, die Toluylsäuren, Hydroxybenzoesäuren, Aminobenzoesäuren, Phthalsäure, Isophthalsäure und Terephthalsäure. Vorzugsweise Anwendung finden folgende Mono- und Dicarbonsäuren sowie Carbonsäureanhydride Oxalsäure, Stearinsäure, Ölsäure, Adipinsäure, Benzoesäure, Benzoesäureanhydrid. Die Mono-, Dicarbonsäuren und deren Anhydride können einzeln oder in Form von Mischungen verwendet werden.

Zur Herstellung der erfindungsgemäßen inneren Trennmittel können die Aufbaukomponenten (Ai) bis (Aii) und (B) gleichzeitig oder nacheinander, zweckmäßigerweise unter Rühren bei Temperaturen von 20 bis 140°C, vorzugsweise von 40 bis 130°C gemischt werden. Nach einer bevorzugten Ausführungsform wird das Amin oder Amingemisch (Ai) vorgelegt, die organischen Mono- und/oder Dicarbonsäuren oder deren Anhydride (B) hinzugefügt und unter Rühren im genannten Temperaturbereich in der erhaltenen Reaktionsmischung die Stearate (Aii) gelöst. Die so erhaltenen Produkte sind oberhalb des Schmelzpunktes eine begrenzte Zeit, beispielsweise bis zu 2 Monaten lagerstabil. Das erhaltene innere Trennmittel wird danach in der erforderlichen Menge in mindestens eine Aufbaukomponente zur Herstellung der Polyurethan-Formkörper, vorzugsweise in die sogenannte Komponente (A), bei Temperaturen von 20 bis 100°C eingebracht.

Als Katalysatoren (e) werden insbesondere Verbindungen verwendet, die die Reaktion der Hydroxylgruppen enthaltenden Verbindungen der Komponenten (b) und gegebenenfalls (c) mit den Polyisocyanaten stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl, N-Ethyl-, N-Cyclohexylmorpholin, N,N,N',N'-Tetramethylethylendiamin, N,N,N',N'-Tetramethyl-butandiamin. Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolverbindungen wie Triethanolamin, Triisopropanolamin, N-Methyl- und N-Ethyl-diethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.%, insbesondere 0,05 bis 2 Gew.% Katalysator bzw. Katalysatorkombination, bezogen auf das Gewicht der Komponente (b).

Der Reaktionsmischung können gegebenenfalls auch noch Hilfsmittel und/oder Zusatzstoffe (f) einverleibt werden. Genannt seien beispielsweise Treibmittel, oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Die nach dem erfindungsgemäßen Verfahren hergestellten elastischen Polyurethan-Formkörper sind im wesentlichen kompakt, d.h. sie werden vorzugsweise in Abwesenheit von Treibmitteln hergestellt. Durch diese Maßnahme wird jedoch die Anwesenheit von Treibmitteln in untergeordneten Mengen, beispielsweise von Wasser, das als Verunreinigung in den Polyolen vorliegen kann, und/oder von inerten, niedrigsiedenden Flüssigkeiten, z.B. halogenierten Kohlenwasserstoffen, wie Methylenchlorid, Trichlorfluormethan, Dichlordifluormethan, Dichlortetrafluorethan und 1,1,2-Trichlor-2,2,1-trifluorethan, die unter den Einfluß der exothermen Polyadditionsreaktion verdampfen, nicht gänzlich ausgeschlossen. Durch die Mitverwendung von geringen Mengen Wasser, beispielsweise von weniger als 0,5 Gew.%, bezogen auf die Komponente (b), kann die Druckfestigkeit der Formkörper erhöht oder durch das Wasser und/oder den Zusatz von inerten niedrigsiedenden Flüssigkeiten einem eventuell auftretenden Schrumpfen der Formkörper entgegengewirkt werden. Sofern inerte niedrigsiedende Flüssigkeiten eingesetzt werden, kommen diese in einer Menge von maximal 4 Gew.-Teilen, vorzugsweise 0 bis 3 Gew.-Teilen, pro 100 Gew.-Teilen der Komponente (b) zur Anwendung.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusföl- bzw. Ricinolsäureester, Türkischrotöl und Erdnußöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteile der Komponente (b), angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest, Wollastonit und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate auf Styrol-Acrylnitrilbasis, die durch in situ Polymerisation von Acrylnitril-Styrol-Mischungem in Polyetherolen analog den Angaben der deutschen Patentschriften 11 11 394, 12 22 669, (US 3 304 273, 3 383 351, 3 523 093) 11 52 536 (GB 1 040 452) und 11 52 537 (GB 987 618) hergestellt werden sowie Filler-polyoxyalkylen-polyole, bei denen wäßrige Polymerdispersionen in Polyoxyalkylen-polyol-dispersionen übergeführt werden.

Die anorganischen und organischen Füllstoffe können einzeln oder als Gemische verwendet werden. Vorzugsweise Anwendung finden stabile Füllstoff-Polyoxyalkylen-Polyol-Dispersionen, bei denen die Füllstoffe in Gegenwart von Polyoxyalkylen-polyolen in situ mit hohen örtlichen Energiedichten auf eine Teilchengröße von üblicherweise kleiner als 7 µm zerkleinert und hierbei gleichzeitig dispergiert werden.

Die anorganischen und organischen Füllstoffe werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt.

Geeignete Flammschutzmittel sind beispielsweise Trikresylphosphat, Tris-2-chlorethylphosphat, Tris-chlorpropylphosphat und Tris-2,3-dibrompropylphosphat.

Außer den bereits genannten halogensubstituierten Phosphaten können auch anorganische Flammschutzmittel, wie Aluminiumoxidhydrat, Antimontrioxid, Arsenoxid, Ammoniumpolyphosphat und Calciumsulfat zum Flammfestmachen der Formkörper verwendet werden. Im allgemeinen hat es sich als zweckmäßig erwiesen, 5 bis 50 Gew.-Teile, vorzugsweise 5 bis 25 Gew.-Teile der genannten Flammschutzmittel für jeweils 100 Gew.-Teile der Komponente (b) zu verwenden.

Nähere Angaben über die obengenannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Zur Herstellung der elastischen, im wesentlichen kompakten Polyurethan-Formkörper werden die organischen Polyisocyanate (a), höhermolekularen Verbindungen mit mindestens zwei reaktiven Wasserstoffatomen (b) und niedermolekularen mehrwertigen Alkohole und/oder Polyoxyalkylen-polyole sowie gegebenenfalls sek. aromatischen Diamine (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und (c) 1:0,85 bis 1,25, vorzugsweise 1:0,95 bis 1,15 beträgt.

Die elastischen, im wesentlichen kompakten Polyurethan-Formkörper werden nach dem Prepolymer-Verfahren oder vorzugsweise nach dem one shot-Verfahren mit Hilfe der Niederdruck-Technik oder insbesondere der Reaktionsspritzguß-Technik (RIM) in offenen oder vorzugsweise geschlossenen Formwerkzeugen, zweckmäßigerweise metallischen Formwerkzeugen, hergestellt. Die Polyurethan-Formulierungen lassen sich auch auf konventionelle Art nach dem Gießverfahren verarbeiten.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem Zweikomponenten-Verfahren zu arbeiten und die Komponenten (b) bis (e) und gegebenenfalls (f) in der Komponente (A) zu vereinigen und als Komponente (B) die organischen Polyisocyanate, modifizierten Polyisocyanate und/oder NCO-Prepolymere zu verwenden. Vorteilhaft ist hierbei beispielsweise, daß die Komponenten (A) und (B) getrennt gelagert und raumsparend transportiert werden können und bei der Verarbeitung nur noch in den entsprechenden Mengen gemischt werden müssen.

Die Ausgangskomponenten werden mit einer Temperatur von 15 bis 80°C, vorzugsweise von 40 bis 55°C in das Formwerkzeug eingebracht. Die Formwerkzeugtemperatur beträgt zweckmäßigerweise 20 bis 100°C, vorzugsweise 30 bis 80°C.

Die nach dem erfindungsgemäßen Verfahren hergestellten elastischen, im wesentlichen kompakten Polyurethan-Formkörper besitzen Dichten von 0,9 bis 1,4 g/cm³, vorzugsweise von 1,0 bis 1,2 g/cm³. Die Formkörper finden Verwendung in der Automobilindustrie, beispielsweise als Stoßstangenabdeckungen, Rammschutzleisten, und Karosserieteile wie Regenrinnen, Kotflügel, Spoiler und Radkastenverbreiterung sowie als technische Gehäuseteile und Laufrollen.

Die in den Beispielen genannte Teile beziehen sich auf das Gewicht.

### Beispiele

### Herstellung des inneren Formtrennmittels I:

Zu einer Mischung aus
448,82 Gew.-Teilen N-2-Aminoethylethanolamin,
102,28 Gew.-Teilen 1-(2-Hydroxiethyl)piperazin,
184,12 Gew.-Teilen 1-(2-Aminoethyl)piperazin,
46,03 Gew.-Teilen Dipropylentriamin und
137,14 Gew.-Teilen n-Butylamin
wurden in einem 6-1-Dreihalskolben unter Rühren bei Raumtemperatur
529,56 Gew.-Teile Ölsäure hinzugefügt.

Die Reaktionsmischung wurde auf 60°C erwärmt und bei dieser Temperatur eine Stunde gerührt. Anschließend wurden der Mischung portionsweise
1447,94 Gew.-Teile Zinkstearat,
52,06 Gew.-Teile Natriumstearat und
52,06 Gew.-Teile Calciumstearat
einverleibt und die Mischung solange bei 100°C gerührt bis eine klare Lösung entstand, die man auf Raumtemperatur abkühlen ließ.

### Herstellung des inneren Formtrennmittels II:

Zu 1224,5 Gew.-Teilen einer Aminmischung, bestehend aus
0,15 Gew.-% Ethylendiamin,
0,15 Gew.-% Ethanolamin
8,1 Gew.-% Diethylentriamin,
31,8 Gew.-% 1-(2-Aminoethyl)-piperazin,
30,8 Gew.-% N-2-Aminoethylethanolamin,
18,4 Gew.-% 1-(2-Hydroxyethyl)-piperazin und
10,6 Gew.-% eines Polyaminoamins mit einem Molekulargerwicht von 700, hergestellt durch thermische Polykondensation von Ethylendiamin,
mit einer Hydroxylzahl von 300 und einer Basenzahl von 1148 wurden in einem 6 1-Dreihalskolben unter Rühren bei Raumtemperatur
706,08 Gew.-Teile Ölsäure hinzugefügt.

Die Reaktionsmischung wurde auf 60°C erwärmt und bei dieser Temperatur eine Stunde lang gerührt. Anschließend wurde der Mischung portionsweise
1930,59 Gew.-Teile Zinkstearat,
69,41 Gew.-Teile Calciumstearat und
69,41 Gew.-Teile Natriumstearat
einverleibt und die Mischung solange bei 120°C gerührt bis eine klare Lösung entstand, die man auf Raumtemperatur abkühlen ließ.

### Vergleichsbeispiel

### Komponente A:

Mischung aus
79,815 Gew.-Teilen eines Polyoxypropylen (80 Gew.%)-polyoxyethylen-(20 Gew.%)-triols mit einer Hydroxylzahl von 26, hergestellt durch Polyaddition von 1,2-Propylenoxid an Trimethylolpropan und anschließender Polyaddition von Ethylenoxid an das erhaltene Trimethylolpropan-polyoxypropylen-Addukt,
20,5 Gew.-Teilen Ethylenglykol,
0,033 Gew.-Teilen 1,4-Diazabicyclo-(2,2,2)-octan und
0,25 Gew.-Teilen Dibutylzinndilaurat.

### Komponente B:

112 Gew.-Teile einer partiell mit Polyoxypropylen-glykol modifizierten Carbodiimidgruppen enthaltenden 4,4'-Diphenylmethan-diisocyanat-Mischung mit einem NCO-Gehalt von 27,5 Gew.%.

Die Komponenten A und B wurden auf 50°C erwärmt und nach dem Reaktionsspritzgußverfahren auf einer Hochdruckdosieranlage vom Typ ^{(R)}Puromat 30 der Elastogran Maschinenbau in einem auf 50 bis 55°C temperierten Formwerkzeug aus Stahl zu einer Prüfplatte mit der Abmessung 4x600x300 mm verarbeitet.

Vor Beginn der Herstellung einer Prüfplattenserie wurde das Formwerkzeug einmalig mit einem externen Trennwachs vom Typ ^{(R)}Fluoricon 36/134/2 der Firma Acmos versiegelt. Die Schußzeit betrug ungefähr 2 Sekunden und die Formstandzeit 30 Sekunden.

Als Anzahl der möglichen Entformungen wurde die Zahl festgelegt, bis zu der die Prüfplatte beim Öffnen des Formwerkzeugs problemlos entnommen werden konnte, ohne daß durch zu hohe Adhäsionskräfte die Prüfplatte an den Werkzeugwandungen festgehalten bzw. verzogen wurde oder das Formwerkzeug nur schwierig zu öffnen war. Die Versuchsserie mußte nach drei Entformungen abgebrochen werden, da die Prüfplatte nur unter Schwierigkeiten entformt werden konnte.

An der erhaltenen Prüfplatte wurden die folgenden mechanischen Eigenschaften gemessen:

| | |
|---|---|
| Dichte nach DIN 53 420 [g/cm³] | 1,02 |
| Shore D-Härte nach DIN 53 505 | 60 |
| Zugfestigkeit nach DIN 53 504 [N/mm²] | 23 |
| Dehnung nach DIN 53 504 [%] | 170 |
| Weiterreißfestigkeit nach DIN 53 507 [N/mm] | 33 |

### Beispiel 1

### Komponente A:

Mischung aus
76,327 Gew.-Teilen eines Polyoxypropylen (80 Gew.%)-polyoxyethylen-(20 Gew.%)-triols mit einer Hydroxylzahl von 26, hergestellt durch Polyaddition von 1,2-Propylenoxid an Trimethylolpropan und anschließender Polyaddition von Ethylenoxid an das erhaltene Trimethylolpropan-polyoxypropylen-Addukt,
19,39 Gew.-Teilen Ethylenglykol,
0,033 Gew.-Teilen 1,4-Diazabicyclo-(2,2,2)-octan und
4,0 Gew.-Teilen Formtrennmittel I.

Das Formtrennmittel I wurde in geschmolzener Form in ein Gemisch aus den anderen Aufbaukomponenten eingerührt.

### Komponente B:

112 Gew.-Teile einer partiell mit Polyoxypropylen-glykol modifizierten Carbodiimidgruppen enthaltenden 4,4'-Diphenylmethan-diisocyanatmischung mit einem NCO-Gehalt von 27,5 Gew.%.

Die Herstellung der Prüfplatten erfolgte analog den Angaben des Vergleichsbeispiels.

Hierbei konnten 15 Prüfplatten problemlos ohne jegliche Verformung entformt werden. Weitere Prüfplatten konnten nicht mehr verzugsfrei entformt werden.

An den erhaltenen, verzugsfrei entformten Prüfplatten wurden die folgenden mechanischen Eigenschaften ermittelt:

| | |
|---|---|
| Dichte nach DIN 53 420 [g/cm³] | 1,01 |
| Shore D-Härte nach DIN 53 505 | 61 |
| Zugfestigkeit nach DIN 53 504 [N/mm²] | 24 |
| Dehnung nach DIN 53 504 [%] | 155 |
| Weiterreißfestigkeit nach DIN 53 504 [N/mm] | 31 |

### Beispiel 2

### Komponente A:

Mischung aus
73,77 Gew.-Teilen eines Polyoxypropylen (80 Gew.%)-polyoxyethylen(20 Gew.%)-triols mit einer Hydroxylzahl von 26, hergestellt durch Polyaddition von 1,2-Propylenoxid an Trimethylolpropan und anschließender Polyaddition von Ethylenoxid an das erhaltene Trimethylolpropan-polyoxypropylen-Addukt,
18,28 Gew.-Teilen Ethylenglykol,
0,033 Gew.-Teilen 1,4-Diazabicyclo-(2,2,2)-octan,
0,25 Gew.-Teilen Dibutylzinndilaurat und
8,0 Gew.-Teilen Formtrennmittel I.

Das Formtrennmittel I wurde in geschmolzener Form in das Gemisch aus den anderen Aufbaustoffen der Komponente A eingerührt.

### Komponente B: analog Beispiel 1.

Die Herstellung der Prüfplatten erfolgte analog den Angaben des Vergleichsbeispiels.

Die Versuchsserie wurde abgebrochen, nachdem 40 Prüfplatten problemlos verzugsfrei entformt werden konnten.

An den erhaltenen Prüfplatten wurden die folgenden mechanischen Eigenschaften gemessen:

| | |
|---|---|
| Dichte nach DIN 53 420 [g/cm³] | 1,05 |
| Shore D-Härte nach DIN 53 505 | 59 |
| Zugfestigkeit nach DIN 53 505 [N/mm²] | 22 |
| Dehnung nach DIN 53 504 [%] | 175 |
| Weiterreißfestigkeit nach DIN 53 507 [N/mm] | 29 |

### Beispiel 3

### Komponente A:

Mischung aus
71,217 Gew.-Teilen eines Polyoxypropylen (80 Gew.%)-polyoxyethylen-(20 Gew.%)-triols mit einer Hydroxylzahl von 26, hergestellt durch Polyaddition von 1,2-Propylenoxid an Trimethylolpropan und anschließender Polyaddition von Ethylenoxid an das erhaltene Trimethylolpropan-polyoxypropylen-Addukt,
16,5 Gew.-Teilen Ethylenglykol,
0,033 Gew.-Teilen 1,4-Diazabicyclo-(2,2,2)-octan,
0,25 Gew.-Teilen Dibutylzinndilaurat,
4,0 Gew.-Teilen eines tetrafunktionellen Polyols auf Basis von Ethylendiamin und Propylenoxid mit einer Hydroxyzahl von 680 und
8,0 Gew.-Teilen Formtrennmittel I.

Das Formtrennmittel I wurde in geschmolzener Form in das Gemisch aus den anderen Aufbaustoffen der Komponente A eingerührt.

### Komponente B: analog Beispiel 1.

Die Herstellung der Prüfplatten wurde analog den Angaben des Vergleichsbeispiels durchgeführt.

Die Versuchsserie wurde abgebrochen, nachdem 40 Prüfplatten ohne jegliche Verklebung oder Verformung entformt werden konnten.

An den erhaltenen Prüfplatten wurden folgende mechanische Eigenschaften ermittelt:

| | |
|---|---|
| Dichte nach DIN 53 420 [g/cm³] | 1,08 |
| Shore D-Härte nach DIN 53 505 | 62 |
| Zugfestigkeit nach DIN 53 504 [N/mm²] | 23 |
| Dehnung nach DIN 53 504 [%] | 145 |

### Beispiel 4

Man verfuhr analog den Angaben von Beispiel 2, verwendet jedoch anstelle des Formtrennmittels I 8 Gew.-Teile des Formtrennmittels II.

Die Versuchsserie wurde abgebrochen, nachdem 40 Prüfplatten problemlos verzugsfrei entformt werden konnten.

An den erhaltenen Prüfplatten wurden folgende mechanischen Eigenschaften gemessen:

| | |
|---|---|
| Dichte nach DIN 53 420 [g/cm³] | 1,05 |
| Shore D-Härte nach DIN 53 505 | 59 |
| Zugfestigkeit nach DIN 53 505 [N/mm²] | 22 |
| Dehnung nach DIN 53 504 [%] | 175 |
| Weiterreißfestigkeit nach DIN 53 507 [N/mm] | 29 |

## Patentansprüche

1. Verfahren zur Herstellung von elastischen, im wesentlichen kompakten Polyurethan-Formkörpern nach dem Polyisocyanat-Polyadditionsverfahren durch Umsetzung von
a) organischen Polyisocyanaten,
b) höhermolekularen Verbindungen mit mindestens 2 reaktiven Wasserstoffatomen und
c) niedermolekularen mehrwertigen Alkoholen und/oder Polyoxyalkylen-polyolen
in Gegenwart von
d) inneren Formtrennmitteln,
e) Katalysatoren sowie gegesebenenfalls
f) Hilfsmitteln und/oder Zusatzstoffen
in einem Formwerkzeug, dadurch gekennzeichnet, daß man als inneres Formtrennmittel verwendet
A) 0,1 bis 15 Gew.-%, bezogen auf das Gesamtgewicht der Komponenten (b) und (c), einer Mischung aus
i) 5 bis 80 Gew.-Teilen einer Mischung aus organischen Aminen aus der Gruppe der primären aliphatischen und/oder cycloaliphatischen Monoamine mit 3 bis 20 Kohlenstoffatomen, der linearen, verzweigten, cyclischen und/oder heterocyclischen Alkanolamine mit 2 bis 12 Kohlenstoffatomen, der alphatischen oder cycloaliphatischen primären Diamine mit 2 bis 20 Kohlenstoffatomen und der aliphatischen oder oycloaliphatischen primären Mono- und/oder Polyamine, die zusätzlich sekundäre und/oder tertiäre Aminogruppen und/oder heterocyclische Reste und/oder Hydroxylgruppen und/oder Ethergruppen enthalten,
ii) 20 bis 95 Gew.-Teilen einer Mischung aus mindestens zwei Stearaten aus der Gruppe von Zink-, Calcium-, Magnesium-, Natrium- und Kaliumstearat,
B) 0,01 bis 32 Gew.%, bezogen auf das Gesamtgewicht der Komponenten (b) und (c) mindestens einer organischen Mono- und/oder Dicarbonsäure oder deren Anhydride.

2. Verfahren nach Anspruch 1, dadurch gekennzeichnet, daß als Komponente (b) Polyole mit einer Funktionalität von 2 bis 3 und einem Molekulargewicht von 480 bis 12.000 und als Komponente (c) niedermolekulare zwei- und/oder dreiwertige Alkohole und/oder di- bis tetrafunktionelle Polyoxyalkylen-polyole mit Molekulargewichten bis 800 verwendet werden.

3. Verfahren nach Anspruch 1, dadurch gekennzeichnet, daß als Metallsalze der Stearinsäure (A, ii) eine Mischung aus Zink-, Calcium- und Natriumstearat verwendet wird.

4. Verfahren nach Anspruch 1, dadurch gekennzeichnet, daß als Mono- und/oder Dicarbonsäuren oder deren Anhydride (B) verwendet werden aliphatische Monocarbonsäuren mit 1 bis 20 Kohlenstoffatomen, aliphatische Dicarbonsäuren mit 2 bis 36 Kohlenstoffatomen, aromatische Mono- und Dicarbonsäuren mit 7 bis 12 Kohlenstoffatomen und deren Anhydride.

5. Verfahren nach Anspruch 1, dadurch gekennzeichnet, daß zur Herstellung des inneren Trennmittels (d) die Komponenten (A, i) und (B) vermischt und der erhaltenen Mischung die Komponente (A, ii) einverleibt wird.

6. Verfahren nach Anspruch 1, dadurch gekennzeichnet, daß zur Herstellung der elastischen, im wesentlichen kompakten Polyurethan-Formkörper one shot-Systeme mit Hilfe der Reaktionsspritzgußtechnik (RIM) in geschlossenen Formwerkzeugen zur Reaktion gebracht werden.

## Claims

1. A process for the production of elastic, essentially compact polyurethane moldings by the polyisocyanate polyaddition process by reacting
a) organic polyisocyanates,
b) relatively high-molecular-weight compounds having at least two reactive hydrogen atoms and
c) low-molecular-weight polyhydric alcohols and/or polyoxyalkylene-polyols
in the presence of
d) internal mold-release agents,
e) catalysts and, if desired,
f) auxiliaries and/or additives,
in a mold, which comprises using, as internal mold-release agent,
A) from 0.1 to 15 % by weight, based on the total weight of components b) and c), of a mixture of
i) from 5 to 80 parts by weight of a mixture of organic amines from the group consisting of primary aliphatic and/or cycloaliphatic monoamines having 3 to 20 carbon atoms, linear, branched, cyclic and/or heterocyclic alkanolamines having 2 to 12 carbon atoms, aliphatic or cycloaliphatic primary diamines having 2 to 20 carbon atoms and aliphatic or cycloaliphatic primary monoamines and/or polyamines additionally containing secondary and/or tertiary amino groups and/or heterocyclic radicals and/or hydroxyl groups and/or ether groups, and
ii) from 20 to 95 parts by weight of a mixture of at least two stearates from the group consisting of zinc stearate, calcium stearate, magnesium stearate, sodium stearate and potassium stearate, and
B) from 0.01 to 32 % by weight, based on the total weight of components (b) and (c), of at least one organic mono- and/or dicarboxylic acid, or an anhydride thereof.

2. A process as claimed in claim 1, wherein component (b) is a polyol having a functionality of from 2 to 3 and a molecular weight of from 480 to 12,000, and component (c) is a low-molecular-weight dihydric and/or trihydric alcohol and/or difunctional to tetrafunctional polyoxyalkylene-polyol having a molecular weight of up to 800.

3. A process as claimed in claim 1, wherein the metal salt of stearic acid (A, ii) is a mixture of zinc stearate, calcium stearate and sodium stearate.

4. A process as claimed in claim 1, wherein the mono- and/or dicarboxylic acid or the anhydride thereof (B) is an aliphatic monocarboxylic acid having 1 to 20 carbon atoms, an aliphatic dicarboxylic acid having 2 to 36 carbon atoms, an aromatic mono- or dicarboxylic acid having 7 to 12 carbon atoms or an anhydride thereof.

5. A process as claimed in claim 1, wherein, in order to prepare the internal release agent (d), components (A, i) and (B) are mixed, and the resultant mixture is introduced into component (A, ii).

6. A process as claimed in claim 1, wherein, in order to produce the elastic, essentially compact polyurethane moldings, one-shot systems are reacted by reaction injection molding (RIM) in closed molds.

## Revendications

1. Procédé de fabrication dans un moule, de corps moulés en polyuréthane élastique, essentiellement compacts, selon le procédé de polyaddition aux polyisocyanates, par réaction
a) de polyisocyanates organiques,
b) de composés à poids moléculaire élevé, ayant au moins 2 atomes d'hydrogène réactifs et
c) de polyols à bas poids moléculaire et/ou de polyoxyalkylène-polyols, en présence
d) d'agents de démoulage internes,
e) de catalyseurs, ainsi qu'éventuellement
f) d'agents auxiliaires et/ou d'additifs,
caractérisé par le fait que l'on utilise, comme agent de démoulage interne,
A) 0,1 à 15 % en poids, rapportés au poids total des composants (b) et (c), d'un mélange composé
i) de 5 à 80 parties en poids d'un mélange d'amines organiques choisies dans le groupe constitué de monoamines primaires aliphatiques et/ou cycloaliphatiques, de 3 à 20 atomes de carbones, d'alkanolamines linéaires, ramifiés, cycliques et/ou hétérocycliques, de 2 à 12 atomes de carbone, de diamines primaires aliphatiques ou cycloaliphatiques, de 2 à 20 atomes de carbone, et de mono- et/ou polyamines primaires, aliphatiques ou cycloaliphatiques, qui contiennent additionnellement des groupes amino secondaires et/ou tertiaires et/ou des restes hétérocycliques et/ou des groupes hydroxyle et/ou des groupes éther,
ii) de 20 à 95 parties en poids d'un mélange composé d'au moins deux stéarates choisis dans le groupe constitué de stéarate de zinc, de calcium, e magnésium, de sodium et de potassium,
B) de 0,01 à 32 % en poids, rapportés au poids total des composants (b) et (c), d'au moins un acide mono- et/ou dicarboxylique organique ou de ses anhydrides.

2. Procédé selon la revendication 1, caractérisé par le fait que l'on utilise, comme composant (b), des polyols d'une fonctionnalité de 2 à 3 et d'un poids moléculaire compris entre 480 et 12.000 et, comme composant (c), des diols et/ou triols à bas poids moléculaire et/ou des polyoxyalkylène-polyols di- à tétrafonctionnels d'un poids moléculaire allant jusqu'à 800.

3. Procédé selon la revendication 1, caractérisé par le fait que l'on utilise, comme sels métalliques de l'acide stéarique (A, ii), un mélange de stéarate de zinc, de calcium et de sodium.

4. Procédé. selon la revendication 1, caractérisé par le fait que l'on utilise, comme acides mono- et/ou dicarboxyliques ou leurs anhydrides (B), des acides monocarboxyliques aliphatiques de 1 à 20 atomes de carbone, des acides dicarboxyliques aliphatiques de 2 à 36 atomes de carbone, des acides monoet dicarboxyliques aromatiques de 7 à 12 atomes de carbone, ainsi que leurs anhydrides.

5. Procédé selon la revendication 1, caractérisé par le fait que pour la préparation de l'agent de démoulage interne (d), on mélange les composants (A,i) et (B) et on incorpore au mélange résultant le composant (A,ii).

6. Procédé selon la revendication 1, caractérisé par le fait que pour la fabrication des corps moulés en polyuréthane élastique, essentiellement compacts, on met à réagir, à l'aide de la technique de réaction par moulage par injection (RIM), des systèmes one shot dans des moules fermés.
